# EUROPEAN PATENT APPLICATION

(11) **EP 4 659 556 A1**
(43) Date of publication of application: **10.12.2025**
(21) Application number: 25180829.1
(22) Date of filing: 04.06.2025
(51) Int. Cl.: A01C 7/08, A01C 7/10

(54) **OUTLET SELECTING VALVE DEVICE FOR APPLICATION OF AGRICULTURAL INPUTS, A SYSTEM AND A SEEDER COMPRISING THE SAME AND A METHOD FOR APPLYING AGRICULTURAL INPUTS**

(30) Priority: 04.06.2024 US 202463655893 P; 19.05.2025 US 202519211811
(71) Applicant: Mario Tanzi S.A., S2183XAB Arequito Santa Fe (AR)
(72) Inventor: TANZI, Ignacio, S2183XAB AREQUITO (AR)
(74) Representative: EP&C

(57) **Abstract**

An outlet selector valve device (1) for distribution of seeding/fertilizing and other products in air seeders, comprising: (a) an inverted "Y"-shaped housing (2) with an inlet opening (3) at the top to receive product from the bottom of a supply hopper, and two different piping outlets (4) for distributing it; (b) a pneumatic conveying line having a common inlet and two opposing outlets suitable for receiving air, passing through the device and propelling air and product through the associated piping; c) a product outlet selector valve (6) by means of a divider plate (7) comprising a deflector shaft (8) that can be positioned at two different angles; and d) a spring (9a) located on a front wall and a spring (9b) located on a rear wall that operate in parallel and are actuated by controls that allow the position angle of the divider plate to be controlled.

## Description

### Technical Field of the Invention

The present invention relates in general to systems for application of agricultural inputs with air, for example, dosing or distribution of sowing or fertilizing products or application of any other agricultural input and, in particular, relates to an outlet selector valve device for dosing of sowing or fertilizing or ejection of any product from an agricultural machinery by pneumatic conduction, for example, a pneumatically driven seeder, being of the type commonly called "air drill" or other, by means of a flow selector valve through which the selection and blocking of the outlet for sowing or fertilizing dosage or distribution of any input from one or more supply tanks is simplified, towards the distribution lines that disperse the products to various open furrows that deposit the product on the soil.

### State of Art and Problems to be Solved

At present, the air seeders and/or fertilizer spreaders, which can be disc or tine driven or apply the product by falling on the surface, comprise a product supply tank that has side walls in a sufficient quantity depending on the design developed for the hoppers, with one or more internal divisions and on the roof some doors/lids to receive the agricultural input and be filled in its different parts, with one or more outlets on the lower wall, comprising a dosing or transfer system for seeds or fertilizers or any other type of input.

These dosing or transfer systems, which are generally located below the hoppers, deliver the input to pipes that then transport it to the furrow openers or to other distribution towers or pipes. These pipes can constitute a single input flow line, which receives the product extracted by the dosing or transfer systems of 2, 3 or a plurality of hoppers.

The dosing systems comprise diverter valves with an inlet port connected to the feeder or hopper through which the inputs fall and outlets connected to the input transport pipes to selectively divert the stream of air and agricultural input to one or another outlet according to convenience.

This type of air machinery includes a system to disperse the products in the necessary quantities by means of a distribution system from the tank to the planting floor by means of supply pipes, of which one pipe line is disabled, blocking one of the outlets and guiding the inputs to the other pipe depending on whether the inputs are to be applied together or separately from 2, 3 or a plurality of hoppers.

This is done by means of different bypass mechanisms that have been developed throughout the evolution of this type of seeding. In US Patent No. 6,834,599 B1, which describes an improved manifold assembly for pneumatic seeding systems, allowing the distribution of materials and fertilizers from multiple supply tanks to pneumatic conveying lines, the diverter mechanism comprises all valves linked together by a common actuating rod.

In US Patent No. 10,631,454 B2, describing an air stream selector device for pneumatic seeding systems, which allows for the selective diverting of agricultural materials through pneumatic conveying lines, the diverter mechanism is a selector device that is removable and repositionable rotated 180° at the bottom of the housing.

However, among the techniques developed we find a complex linkage in which all valves must be exchanged together, or when the routing is allowed to be modified individually, disassembly, rotation and compounding work is required, generating extra effort and suboptimal use of time. It is important for the farmer to be able to recognize the system in a visible and noticeable way, that is why a new spring loaded selector valve device is proposed, which can be easily and practically manipulated and selected.

Another problem to be solved is the tendency for air to continue to leak due to the difficulty in locating the internal partitions correctly.

### Object of the Invention

Therefore, one of the objects of the present spring loaded selector valve device is to achieve the closure of the distribution of a pipeline, which is achieved by means of an outlet selector valve for dosage/distribution of sowing/fertilization products or others that is located inside the inverted "Y"-shaped housing of the device, using the potential energy of the spring and ensuring a closure that prevents the passage of air, substances and/or product grains into the blocked pipeline.

Another of the objectives of the spring loaded selector valve device is to simplify its operation by simply applying pressure with the finger, without requiring tools, minimizing the adjustment time and without making disassemblies that could lead to loss of components or assembly errors.

### Summary of the Invention

Therefore, an object of the present invention is an outlet selector valve device for dosing/distribution of seeding/fertilizing or other products, for use in air-powered agricultural machinery, e.g. air seeders, comprising:
(a) an inverted "Y"-shaped housing with an inlet opening at the top for receiving product from the bottom of a supply hopper, and two different pipe outlets for distributing it;
b) a pneumatic conveying line having a common inlet and two opposing outlets suitable for receiving air, passing through the system and propelling air and product through the associated piping;
c) an air and product outlet selector valve by means of a divider plate comprising a deflector shaft which can be positioned at two different angles; and
d) a spring located on the front wall and a spring located on the rear wall which operate in parallel and are actuated by controls that allow the position angle of the divider plate to be controlled.

Preferably, the inverted "Y"-shaped housing is constituted by two attachable halves.

In particular, the attachable halves are held in place by means of fastening means.

Also preferably, one end of each of the first spring and the second spring is linked to a point fixed to the housing, and the opposite end is fixed to the knob permitting control of the position angle of the divider plate.

Preferably, the outlet selector valve device also comprises a removable base which has two lids fixed to it allowing access to inspection windows to the distribution pipes.

Particularly, the base is mounted threaded on a centrally arranged spigot and is tightened with a nut.

Another object of the present invention is a system for application of agricultural inputs with air, comprising a described outlet selector valve device.

Additionally, an air seeder comprising an outlet selector valve device according to the invention is claimed as well as a method for applying agricultural inputs with a system for applying agricultural inputs with air, for example, an air seeder, comprising an outlet selector valve device, wherein said method comprises positioning the divider plate at two different angles.

### Brief Description of the Figures

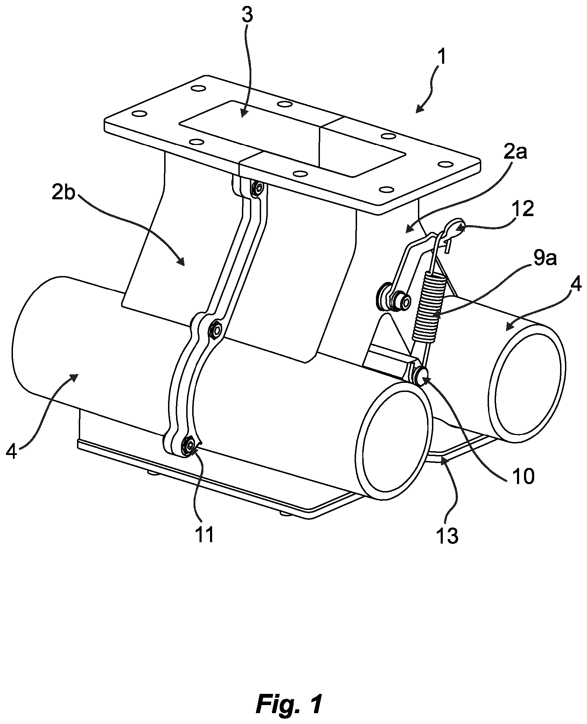

Figure 1 shows a front top perspective view from the right side of a preferred embodiment of the outlet selector valve device for metering/distribution of seeding/fertilizing or other products, for use in air-powered agricultural machinery, e.g., air seeders, according to the present invention.

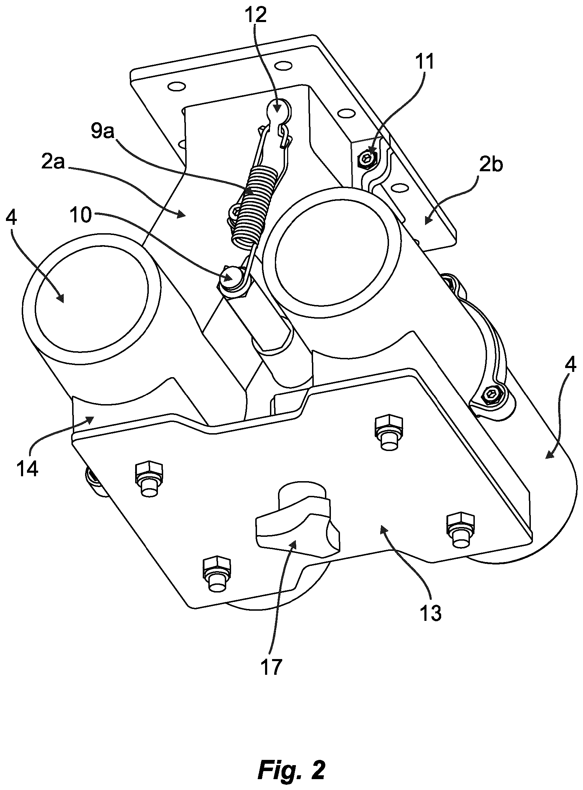

Figure 2 shows a front bottom perspective view of one embodiment of the outlet selector valve device for metering/distribution of seeding/fertilizing or other products, for use in air-powered agricultural machinery, e.g., air seeders, of Figure 1.

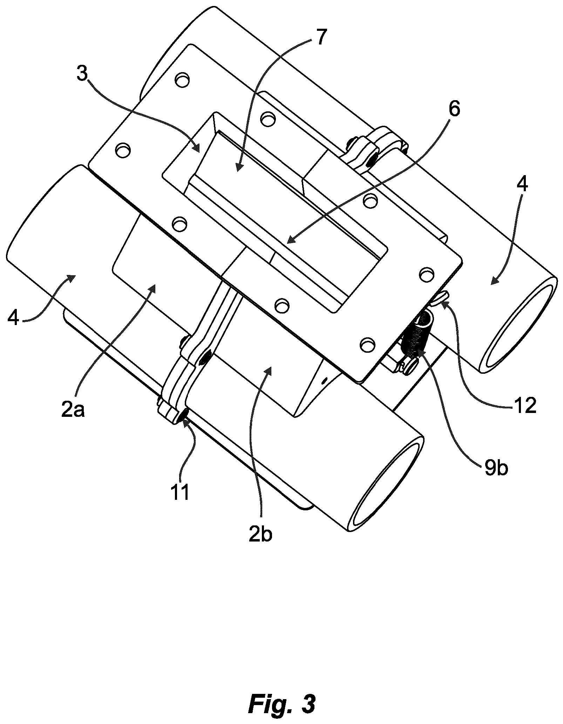

Figure 3 shows a top perspective view of the embodiment of the outlet selector valve device for metering/distribution of seeding/fertilizing or other products, for use in air-powered agricultural machinery, e.g. air seeders, of Figure 1.

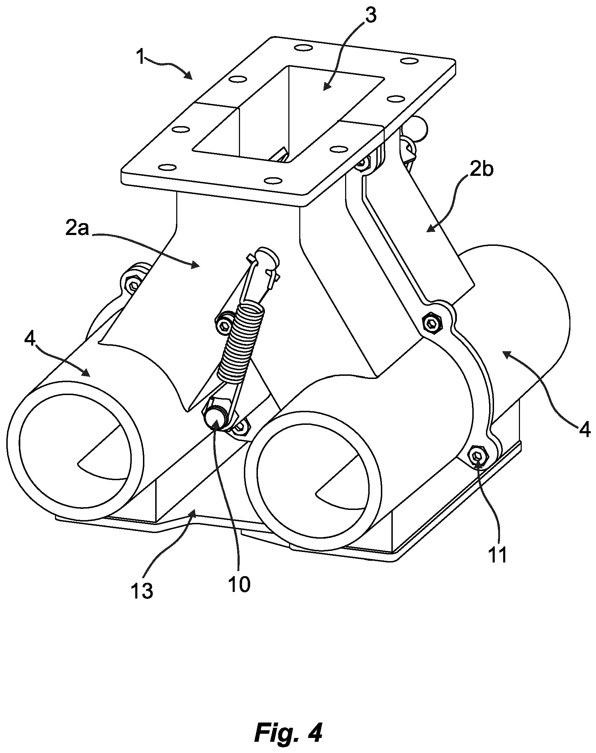

Figure 4 shows a front top perspective view from the left side of an embodiment of the outlet selector valve device for metering/distribution of sowing/fertilizing or other products, for use in air-powered agricultural machinery, e.g. air seeders, of Figure 1.

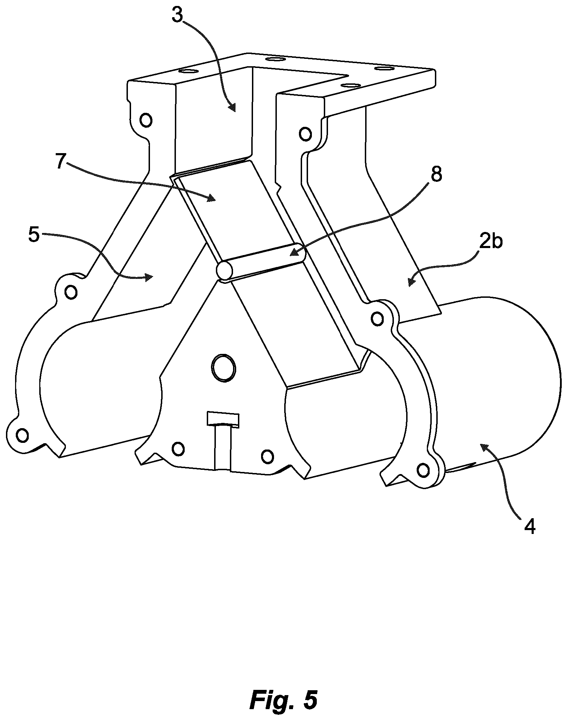

Figure 5 shows a perspective of one half of the outlet selector valve device for metering/distribution of seeding/fertilizing or other products, for use in air-powered agricultural machinery, e.g., air seeders, of Figure 1.

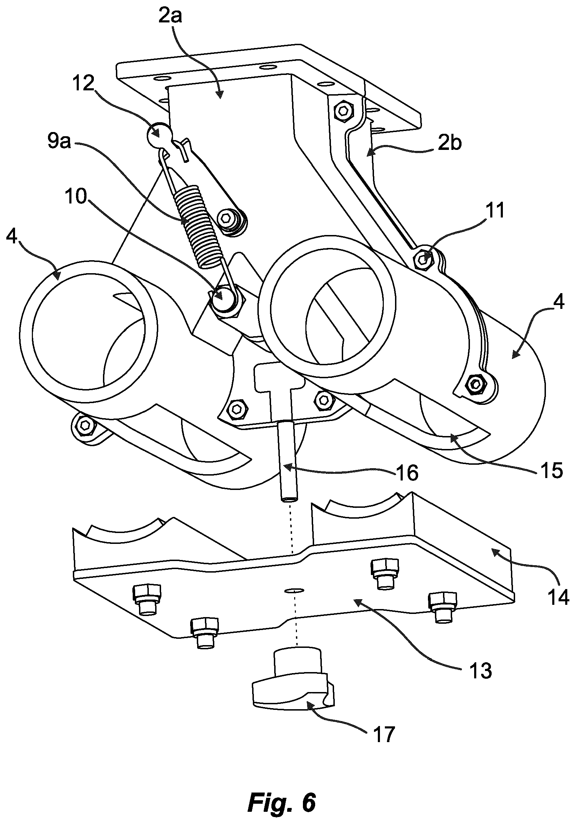

Figure 6 shows a partially exploded bottom perspective view of the outlet selector valve device for metering/distribution of seeding/fertilizing or other products, for use in air-powered agricultural machinery, e.g., air seeders, of Figure 1.

### Detailed Description of the Invention

The present invention is applicable to all air distribution agricultural machinery, whether the product comes from one, two or more supply hoppers.

An outlet selector valve device for application of agricultural inputs (1), e.g., dosing or distribution of seeding or fertilizing products or others, for use in systems for application of agricultural inputs with air, e.g., air seeders, comprising:
(a) an inverted "Y"-shaped housing (2) with an inlet opening (3) at the top for receiving the from the bottom of a supply hopper, and two different pipe outlets (4) for distributing it;
b) a pneumatic conveying line having a common inlet (3) and two opposite outlets (5) suitable for receiving air, passing through the device (1) and impelling air and the agricultural input through the associated pipes (4);
c) an air outlet selector valve (6) and the agricultural input by means of a divider plate (7) comprising a deflector shaft (8) which can be positioned at two different angles; and
d) a first spring (9a) located on a front wall of the housing and a second spring (9b) located on a rear wall of the housing which operate in parallel and are actuated by controls (12) that allow controlling the position angle of the divider plate (7).

The inverted "Y"-shaped housing (2) of the selector valve device (1) consists of two attachable halves (2a, 2b), wherein the attachable halves (2a, 2b) are held in place by fastening means (11).

The purpose pursued by the invention is achieved by means of an outlet selector valve device (1) for the sowing, fertilizing or ejection metering of any product from an air-powered agricultural machinery, for example, an air-powered seeder having an outlet flow selector valve (6), which is based on a divider plate (7), solidary to a shaft (8) and to a set of controls (12) with springs (9a, 9b), being able to be one, two or more springs.

The divider plate (7) is located inside the housing (2) and its position can be manipulated from the outside. The springs (9a, 9b) whose extremities are linked to a point (10) fixed to the housing allow to control the angle of the divider plate (7) to a selected position, freeing and inversely blocking one of the ducts for the transfer and distribution of the agricultural input.

In turn, these springs (9a, 9b) maintain tension on the device (1) so that the valve (6) does not change position unexpectedly. When the springs (9a, 9b) are manipulated by turning the knobs (12) on their shafts (8), the plate changes its position and opens to the flow of air and input. The divider plate (7) is retained on the internal walls of the housing (2) so as not to allow the transfer of input to the other duct.

One end of each spring (9a, 9b) is linked to a point (10) fixed to the housing which allows controlling the position angle of the divider plate (7), and the opposite end is fixed to the knob (12) of said divider plate (7).

In this way, the spring-loaded valve device (1) of the present invention is controlled by means of knobs (12) which are located outside the housing (2) allowing selecting the opening and closing option manually and at any time, its current working position being always visible.

The outlet selector valve device (1) for metering/distribution of sowing/fertilizing products and others, for use in air-powered agricultural machinery, for example, an air seeder, of the present invention also comprises a removable base (13) having two lids (14) fixed to it which allow access to two windows (15) for inspection of the pipes (4) and weighing of the inputs for calibration of the distribution system. The base (13) is mounted to the outlet selector valve device (1) by threading it onto a centrally arranged threaded shaft (16) and tightened with a nut (17).

In this way, the selector valve device (1) can be configured to divert the supplied input current through two different paths by means of its inverted "Y"-shape.

## Claims

1. An outlet selector valve device for application of agricultural inputs, e.g., dosing or distribution of seeding or fertilizing products or other, for use in systems for application of agricultural inputs with air, e.g., air seeders, comprising:
a) an inverted "Y"-shaped housing with an inlet opening at the top to receive agricultural input from the bottom of a supply hopper, and two different piping outlets to distribute it;
b) a pneumatic conveying line having a common inlet and two opposing outlets suitable for receiving air, passing through the device and propelling air and agricultural input through the associated piping;
c) an air outlet selector valve and the agricultural input by means of a divider plate comprising a deflector shaft and capable of being positioned at two different angles; and
d) a first spring located on a front wall of the housing and a second spring located on a rear wall of the housing which operate in parallel and are actuated by controls for controlling the position angle of the divider plate.

2. The outlet selector valve device according to claim 1, wherein the inverted "Y"-shaped housing comprises two attachable halves.

3. The outlet selector valve device according to claim 2, wherein the attachable halves are held in place by fastening means.

4. The outlet selector valve device according to any one of the preceding claims, wherein one end of each of the first spring and the second spring is linked to a point attached to the housing, and the opposite end is attached to the knob allowing control of the position angle of the divider plate.

5. The outlet selector valve device according to any one of the preceding claims, further comprising a removable base having two lids attached thereto which allow access to two inspection windows to the distribution pipes.

6. The outlet selector valve device according to claim 5, wherein the base is mounted threaded on a centrally arranged spigot and is tightened with a nut.

7. A system for applying agricultural inputs with air, comprising an outlet selector valve device according to any one of the preceding claims.

8. An air seeder comprising an outlet selector valve device according to any one of the claims 1 - 6.

9. A method for applying agricultural inputs with a system for applying the agricultural inputs with air, for example, an air seeder, comprising an outlet selector valve device according to any one of the claims 1 - 6, wherein the method comprises positioning the divider plate at two different angles.
